# EUROPÄISCHE PATENTSCHRIFT

(11) **EP 3 442 884 B1**
(45) Veröffentlichungstag und Bekanntmachung des Hinweises auf die Patenterteilung: **02.06.2021**
(21) Anmeldenummer: 17713030.9
(22) Anmeldetag: 28.03.2017
(51) Int. Cl.: B65G 9/00

(54) **TRANSPORTTASCHE, FÖRDERVORRICHTUNG UND VERFAHREN ZUM ÖFFNEN BZW. SCHLIESSEN EINER TRANSPORTTASCHE**
TRANSPORT BAG, CONVEYOR ASSEMBLY AND A METHOD OF OPENING AND CLOSING A TRANSPORT BAG
SAC DE TRANSPORT, DISPOSITIF DE TRANSPORT ET PROCEDE D'OUVERTURE OU DE FERMETURE D'UN SAC DE TRANSPORT

(30) Priorität: 15.04.2016 EP 16165604
(43) Veröffentlichungstag der Anmeldung: 20.02.2019
(73) Patentinhaber: Dematic Logistics GmbH, 63150 Heusenstamm (DE)
(72) Erfinder: OTTO, Thomas, 33615 Bielefeld (DE)
(74) Vertreter: Moser Götze & Partner Patentanwälte mbB
(86) Internationale Anmeldenummer: PCT/EP2017/057291
(87) Internationale Veröffentlichungsnummer: WO 2017/178225

(56) Entgegenhaltungen:
- EP-A1- 2 786 940
- EP-B1- 2 130 968
- FR-A1- 2 430 363
- US-A- 4 140 163

## Beschreibung

Die vorliegende Erfindung betrifft eine Transporttasche für eine Fördervorrichtung gemäß dem Oberbegriff des Anspruchs 1, eine Fördervorrichtung, ein Verfahren zum Öffnen einer Transporttasche sowie ein Verfahren zum Schließen einer Transporttasche.

Eine gattungsgemäße Transporttasche ist beispielsweise aus der EP 2 130 968 B1 bekannt. Die dort beschriebene Transporttasche besteht im Wesentlichen aus zwei Taschenwänden, die an einem oberen Ende über einen Bügel miteinander verbunden sind, an dem eine Einhängevorrichtung zum Einhängen in einer Schiene einer Fördervorrichtung dient. Die unteren Enden der Taschenwände sind über eine Kupplung miteinander verbunden, die über einen am oberen Ende der Taschenwände angeordneten Betätigungsmechanismus betätigbar ist, um die unteren Ende der Taschenwände zum Transportieren eines Gegenstandes aneinander zu koppeln. Im aneinander gekoppelten Zustand wird so eine Tasche ausgebildet. Zum Entladen werden die Taschenwände voneinander getrennt, so dass der mit der Transporttasche transportierte Gegenstand nach unten herausfallen kann.

Aus der FR 2 430 363 A1 ist eine Einkaufstasche bekannt, die zum Öffnen und Verschließend der oberen Öffnung zwei gegeneinander verschiebbare Leisten aufweist, wobei die Leisten nach Art eines Bajonettverschlusses durch eine Relativbewegung in Längsrichtung, eine Steck-Schiebe-Bewegung, in Eingriff und durch die umgekehrte Reihenfolge der Relativbewegung, eine Schiebe-ZugBewegung, außer Eingriff bringbar sind.

Aufgabe der vorliegenden Erfindung ist es, eine Transporttasche, eine Fördervorrichtung und eine Entladestation und ein Verfahren zum Öffnen bzw. Entladen sowie eine Schließstation und ein Verfahren zum Schließen einer solchen Transporttasche bereitzustellen, mit der eine nochmals vereinfachte Öffnung und Schließung der Transporttasche am unteren Ende ermöglicht ist. Zudem sollen der Öffnungs- und Verschlussmechanismus besonders einfach und robust aufgebaut sein.

Diese Aufgabe wird durch eine Transporttasche für eine Fördervorrichtung mit den Merkmalen des Anspruchs 1, durch eine Förderanlage mit den Merkmalen des Anspruchs 10, ein Verfahren zum Öffnen einer Transporttasche mit den Merkmalen des Anspruchs 14 sowie durch ein Verfahren zum Schließen einer Transporttasche mit den Merkmalen des Anspruchs 15 sowie Anordnungen nach Ansprüchen 16 und 17 gelöst.

Die erfindungsgemäße Transporttasche weist eine erste Taschenwand, eine zweite Taschenwand sowie an einem oberen Ende einer der Taschenwände angeordnete Einhängvorrichtung auf. An einem unteren, von der Einhängvorrichtung entfernten Ende der Taschenwände sind als reversibel aneinander koppelbare Schließelemente angeordnet, mit denen die unteren Enden der Taschenwände zu einem die Transporttasche nach unten verschließenden Taschenboden miteinander verbindbar sind.

Die Schließelemente sind als parallel zueinander auseinander ausgerichtete, miteinander verrastbare Rastleisten ausgebildet. Die Rastleisten sind dabei aus einer die Transporttasche am unteren Ende verschließenden, miteinander verrasteten Transportstellung durch relatives Verschieben gegeneinander in Richtung der Längsachse der Rastleisten in eine Entraststellung verschiebbar, bei der die Rastleisten zur Öffnung der Transporttasche am unteren Ende voneinander lösbar sind.

Eine solche Transporttasche ist in besonders einfacher Weise nach unten öffenbar und wiederverschließbar. Damit ergibt sich auch ein einfach durchzuführender Entladevorgang der Transporttasche.

Durch die Ausbildung der Schließelemente als miteinander verrastbare Rastleisten, die in Längsrichtung zueinander verschiebbar sind, ist außerdem ein unbeabsichtigtes Öffnen der Transporttasche zuverlässig verhindert.

Gleichzeitig ermöglicht die Verschiebung der Rastleisten zueinander in Längsrichtung der Rastleisten ein besonders einfaches Entrasten und damit ein sehr einfaches Öffnen der Transporttasche zur Entladung nach unten.

Gemäß einer vorteilhaften Ausführungsvariante der Erfindung sind an der ersten Rastleiste wenigstens zwei in Richtung ihrer Längsachse voneinander beabstandete Rastelemente angeordnet, die im miteinander verrasteten Zustand der Rastleisten in Rastausnehmungen der zweiten Rastleiste gehalten sind, die in Richtung ihrer Längsachse voneinander beabstandet sind.

Dadurch ist ein einfaches Verrasten der Rastelemente in den Rastausnehmungen ermöglicht. Mit anderen Worten, das Verrasten der Rastleisten findet durch eine Bewegung der Rastleisten quer zur Längsrichtung, einem Einclipsen, statt, im Vergleich zum Entrasten durch eine lineare Verschiebebewegung in Längsrichtung der Rastleisten. Es wird also anders als bei einem Bajonettverschlussprinzip (z.B. FR 2 430 363 A1) nicht eine Bewegung zum Verrasten und die umgekehrte Bewegung zum Entrasten, sondern eine Querbewegung zum Verrasten und eine Längsrichtung zum Entrasten verwendet.

Dies erlaubt ein besonders einfaches Verschließen der Transporttasche durch Aufeinanderzubewegen und in Eingriffbringen (Verrasten) der Rastleisten. Dies ist umsoleichter, als die geöffneten Transporttaschenwände bereits durch Auspendeln in der benötigten Orientierung angeordnet sind.

Die Rastleisten sind gemäß einer vorteilhaften Ausführungsvariante gleich lang ausgebildet. Dabei ist die erste Rastleiste im mit der zweiten Rastleiste verrasteten Zustand in Richtung ihrer Längsachse parallel versetzt zur zweiten Rastleiste angeordnet.

Das Versetzungsmaß der Parallelversetzung der Rastleisten beträgt bevorzugt zwischen 1 cm und 10 cm, insbesondere zwischen 1 cm und 5 cm, wodurch zum einen eine hinreichend stabile Verrastung im verrasteten Zustand gewährleistet wird und zum zweiten eine hinreichende Durchbiegesteifigkeit insbesondere der überstehenden Enden der Rastleisten im verrasteten Zustand beim Entrastungsvorgang.

Die Rastelemente sind gemäß einer bevorzugten Ausführungsvariante als Haken und die Rastausnehmungen als Hinterschnitt ausgebildet.

Besonders bevorzugt sind die Rastelemente dabei c-förmig, oder A-förmig oder pfeilspitzenartig, die Hinterschnitte hintergreifend, ausgebildet.

Die beidseitige Umgreifung bzw. Hintergreifung der Hinterschnitte durch die Rastelemente gewährleistet eine besonders zuverlässige Verrastung der Rastleisten aneinander. Dies kann durch Einclipsen vorgenommen werden.

Erfindungsgemäß ist an der ersten Rastleiste wenigstens eine in Richtung der zweiten Rastleiste vorstehende Nase angeformt ist, die im miteinander verrasteten Zustand der Rastleisten in einer Ausnehmung auf einer der ersten Rastleiste zugewandten Seitenkante der zweiten Rastleiste einliegt, wobei die Breite der Ausnehmung in Richtung der Längsachse der zweiten Rastleiste so bemessen ist, dass die Nase bei in die entrastete Position verschobenen Rastleisten aus der Ausnehmung heraus geschoben ist.

Dadurch ist eine zuverlässige Trennung der Rastleisten voneinander unmittelbar nach dem Entrastungsvorgang gewährleistet, da die Nase nach dem Verschieben der Rastleisten in die Entrastungsstellung die zweite Rastleiste von der ersten Rastleiste senkrecht zur Längsrichtung der Rastleisten wegdrückt. Gleichzeitig bewirkt diese Nase/Ausnehmung, dass zum Entrasten eine bestimmte Kraft überwunden werden muss, was ein unbeabsichtigtes Öffnen bei einem ungewollten Stoß verhindert.

Gemäß einer weiteren vorteilhaften Ausführungsvariante sind die oberen, der Einhängvorrichtung nahen Enden der Taschenwände an einem um eine parallel zur Längsachse der Rastleisten ausgerichtete Schwenkachse schwenkbaren, eine Tascheneinfüllöffnung bildenden Gestänge befestigt. Die Einhängvorrichtung ist dabei bevorzugt am Gestänge befestigt.

Mit einem solchen Gestänge ist ein einfaches Öffnen des oberen Bereichs der Transporttasche zum Befüllen derselben mit dem zu befördernden Gegenstand bzw. der zu befördernden Gegenstände ermöglicht.

Die Taschenwände sind bevorzugt durch zwei faltbare Seitenwände miteinander verbunden. Je nach Größe der zu befördernden Gegenstände ist es auch denkbar, die Taschenwände an den Seitenrändern lediglich über Schnüre, Bänder oder dergleichen miteinander zu verbinden, um ein seitliches Herausfallen des zu befördernden Gegenstandes zu verhindern.

Die Rastleisten sind bevorzugt an den Taschenwänden festgeklemmt. Denkbar ist auch, die Rastleisten in dazu vorgesehene Taschen in den Taschenwänden einzunähen oder anderweitig zu befestigen.

Die erfindungsgemäße Förderanlage zeichnet sich durch eine oder mehrere wie oben beschriebene Transporttaschen aus.

Besonders bevorzugt weist eine Entladestation der Fördervorrichtung zwei Druckmittel (z.B. Druckstempel) mit einer etwa senkrecht zur Richtung der Längsachse der Rastleisten sich erstreckenden Andruckfläche auf, zwischen denen die Transporttasche positionierbar ist.

Dabei ist wenigstens einer der Druckmittel in Richtung der Längsachse der Rastleisten derart verfahrbar, dass der Abstand zwischen den Druckmitteln zwischen einem Einfahrmaß, das größer ist als die Gesamtlänge der parallel versetzten Rastleisten im miteinander verrasteten Zustand, und einem Entrastungsmaß, dass der Länge der Rastleisten entspricht, veränderbar ist.

Mit anderen Worten die Rastleisten werden durch seitliche Beaufschlagung quer zur Förderrichtung gegeneinander verschoben und somit geöffnet.

Mit einer solchen Entladestation ist in einfacher Weise ein automatisches Entrasten der Rastleisten und damit ein automatisches Öffnen der Transporttasche zum Entladen des in der Transporttasche transportierten Gegenstandes ermöglicht.

Besonders bevorzugt erfolgt auch die Schließung des unteren Bereichs der Transporttasche in automatischer Weise.

Dazu ist eine ,ggf. der Entladestation in Förderrichtung nachfolgende, Taschenschließstation vorgesehen, mit zwei etwa senkrecht oder quer zur Richtung der Längsachse der Rastleisten relativ aufeinander zu bewegbaren Druckmittel, zwischen denen die Transporttasche positionierbar ist, wobei die Druckmittel von einer die voneinander getrennten Rastleisten zwischen sich aufnehmenden Position in eine die Rastleisten senkrecht zur Richtung der Längsachse der Rastleisten zusammendrückenden und dabei miteinander verrastenden Schließposition bewegbar sind.

Mit anderen Worten die Rastleisten werden durch Beaufschlagung in Förderrichtung gegeneinandergedrückt und somit verrastet oder eingeclipst.

Die Druckmittel (z.B. Druckplatten) sind dabei besonders bevorzugt um eine parallel zur Längsachse der Rastleisten (oder quer zur Förderrichtung) verlaufende Schwenkachse verschwenkbar und können so unterhalb der in die Taschenschließstation geleiteten Transporttaschen befestigt werden. Die Transporttasche kann so ohne Berührung der Druckmittel in den Eingriffbereich der Druckmittel geführt werden. Anschließend werden die Druckmittel in die Schließposition verschwenkt und dabei die Rastleisten der Transporttasche durch Zusammendrücken miteinander verrastet.

Das erfindungsgemäße Verfahren zum Öffnen der Transporttasche zeichnet sich durch seine einfach und zuverlässig bewerkstelligbaren Öffnungsschritte zur Öffnung der Transporttasche aus.

Ebenso einfach und zuverlässig ist das Schließen der Transporttasche durch das erfindungsgemäße Verfahren zum Schließen der Transporttasche ermöglicht.

Eine erfindungsgemäße Taschenentladestation umfasst also zwei Druckmittel mit je einer etwa senkrecht zur Richtung der Längsachse der Rastleisten sich erstreckenden Andruckfläche, zwischen denen die geschlossene Transporttasche mit den Rastleisten positionierbar ist, wobei der Abstand der Druckmittel in Richtung der Längsachse der Rastleisten derart zueinander verkleinerbar ist, dass die Rastleisten zum Entrasten zueinander verschoben werden, was wie oben beschrieben die Öffnung der Tasche bewirkt. Es kommt also darauf an, dass die Rastleiten in Längsrichtung gegeneinander verschoben werden.

Eine erfindungsgemäße Taschenschließstation umfasst also zwei quer zur Richtung der Längsachse der Rastleisten aufeinander zu bewegbaren Druckmittel, zwischen denen die geöffnete Transporttasche mit den Rastleisten positionierbar ist, wobei der Abstand der Druckmittel quer zur Richtung der Längsachse der Rastleisten derart zueinander verkleinerbar ist, dass die Rastleisten zum Verrasten aufeinandergepresst werden. Mit anderen Worten, die Rastleisten müssen zum Einclipsen aufeinandergedrückt werden.

Nachfolgend werden bevorzugte Ausführungsvarianten der Erfindung anhand der beiliegenden Zeichnungen näher erläutert. Es zeigen:
Figur 1 eine schematische perspektivische Ansicht einer Ausführungsvariante einer erfindungsgemäßen Transporttasche im geöffneten Zustand,
Figur 2 eine Seitenansicht der in Figur 1 gezeigten Transporttasche,
Figur 3 eine Frontansicht der in Figur 1 gezeigten Transporttasche,
Figur 4 eine perspektivische Ansicht der Transporttasche aus Figur 1 in geschlossenem Zustand,
Figur 5 eine Seitenansicht der Transporttasche im geschlossenen Zustand,
Figur 6 eine Frontansicht der Rastleisten im miteinander verrasteten Zustand,
Figur 7 eine Schnittansicht der miteinander verrasteten Rastleisten entlang einer in Figur 6 mit A-A bezeichneten Schnittlinie,
Figur 8 eine Schnittansicht der miteinander verrasteten Rastleisten entlang einer in Figur 6 mit C-C bezeichneten Schnittlinie,
Figur 9 eine Schnittansicht der miteinander verrasteten Rastleisten entlang einer in Figur 8 mit E-E bezeichneten Schnittlinie durch einen Rastbereich der Rastleisten,
Figur 10 eine der Figur 6 entsprechende Darstellung der Rastleisten in der Entraststellung,
Figur 11 eine Schnittansicht durch eine in Figur 10 mit B-B bezeichnete Schnittlinie,
Figur 12 eine Schnittansicht der Rastleisten im entrasteten Zustand entlang einer mit F-F bezeichneten Schnittlinie in Figur 11,
Figur 13 eine perspektivische Darstellung einer Entladestation einer Ausführungsvariante einer erfindungsgemäßen Fördervorrichtung und
Figur 14 eine perspektivische Ansicht einer Ausführungsvariante einer Taschenschließstation der Fördervorrichtung.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Transporttasche, der Taschenwand, der Rastleiste, der Rastelemente, der Fördervorrichtung und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

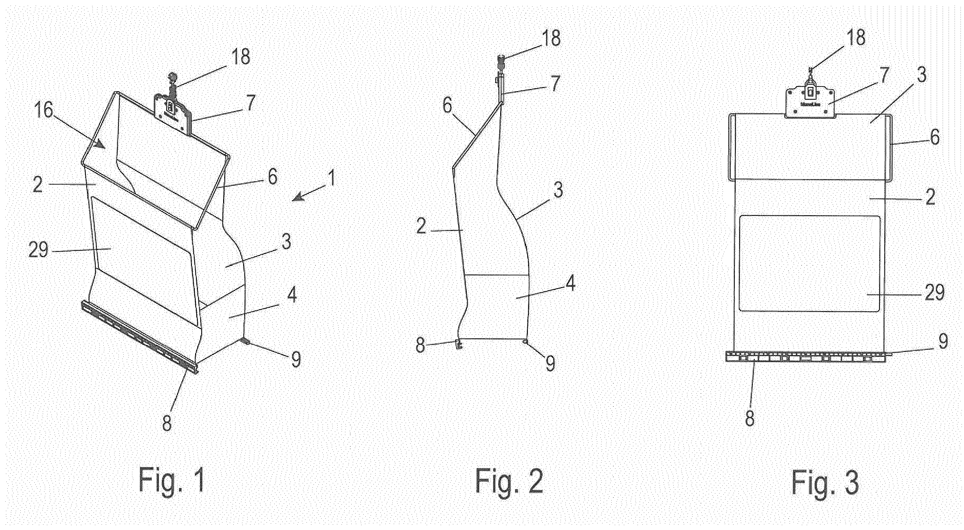

In den Figuren 1 bis 5 ist mit dem Bezugszeichen 1 insgesamt eine Ausführungsvariante einer erfindungsgemäßen Transporttasche bezeichnet. Die Transporttasche 1 weist eine erste Taschenwand 2 und eine zweite Taschenwand 3 auf.

Beide Taschenwände 2, 3 sind an einem oberen Ende bevorzugt an einem Gestänge 6 festgelegt. Das Gestänge 6 ist dabei bevorzugt als rechteckiger Rahmen ausgebildet, der eine Tascheneinfüllöffnung 16 bildet, durch die die Transporttasche 1 mit einem zu transportierenden Gegenstand oder mehreren solcher zu transportierender Gegenstände befüllbar ist.

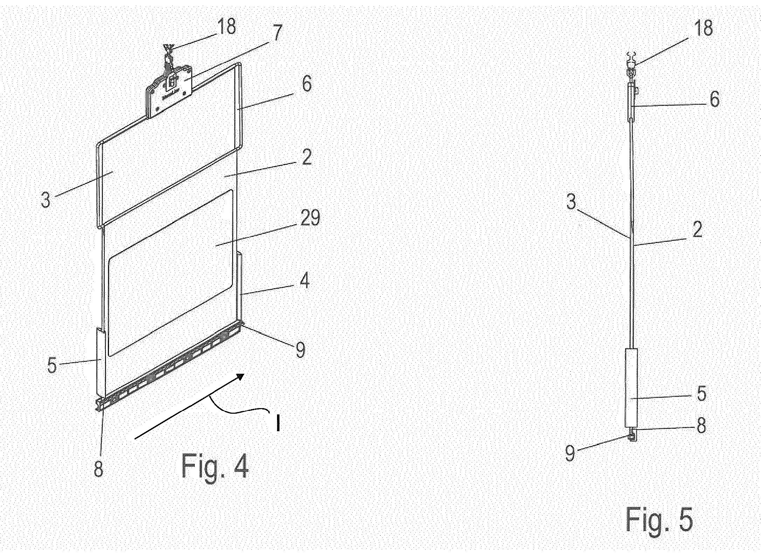

Zum Befüllen der Transporttasche wird das als rechteckiger Rahmen ausgebildete Gestänge 6 dabei aus einer vertikal ausgerichteten Position, gezeigt in den Figuren 4 oder 5, um eines der Gestängeteile, an dem eine der Taschenwände 2, 3 festgelegt ist, in eine winklig zur Vertikalen stehende oder horizontale Position verschwenkt, wie beispielsweise in den Figuren 1 oder 2 gezeigt.

Am oberen Ende einer der Taschenwände 2, 3, im Ausführungsbeispiel gemäß Figur 1 am oberen Ende der zweiten Taschenwand 3 ist eine Einhängvorrichtung 7 angeordnet. Diese Einhängvorrichtung 7 umgreift dabei bevorzugt einen Schenkel des Gestänges 6, an dem die zweite Taschenwand 3 befestigt ist.

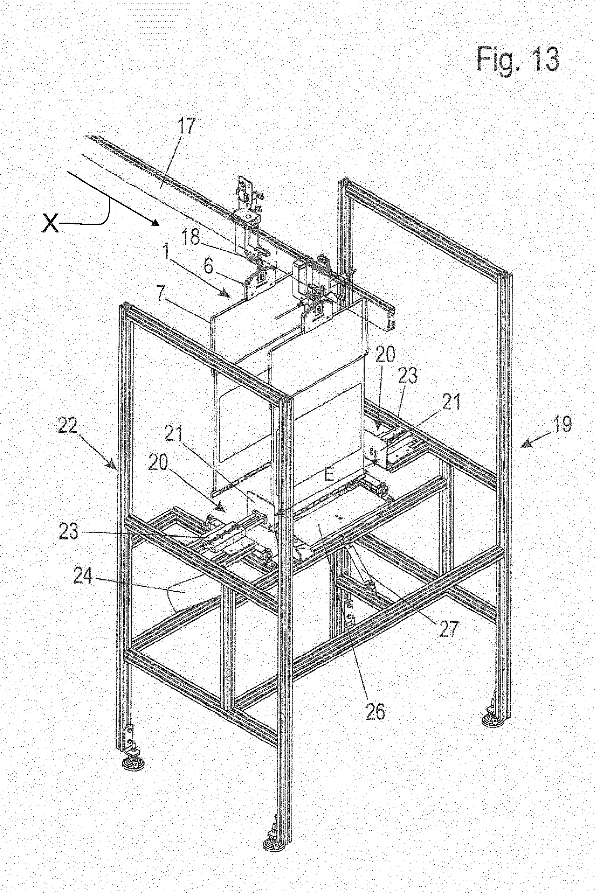

Mit der Einhängvorrichtung 7 ist bevorzugt ein Halteadapter 18 verbunden, dessen Kopfstück in ein Schienenprofil 17 einer Hängefördervorrichtung einsetzbar ist, die mit einer in einer Förderrichtung x (siehe Figur 13) bewegbaren Förderkette ausgestaltet ist, wie es beispielsweise in Figur 13 dargestellt ist.

Im unteren Bereich der Transporttasche 1 sind die Taschenwände 2, 3 bevorzugt durch Seitenwände 4, 5 verbunden. Sowohl die Taschenwände 2, 3 als auch die Seitenwände 4, 5 bestehen dabei zumindest teilweise aus einem Textil. Denkbar ist auch, ein Teilstück der ersten oder zweiten Taschenwand 2, 3 formstabil als Platte 29 auszubilden, wie es in Figur 1 dargestellt ist.

Anstelle eines separaten Taschenbodens sind am unteren, von der Einhängvorrichtung 7 entfernten Ende der Taschenwände 2, 3 jeweils reversibel aneinander koppelbare Schließelemente angeordnet, mit denen die unteren Enden der Taschenwände 2, 3 zu einem Taschenboden miteinander verbindbar sind.

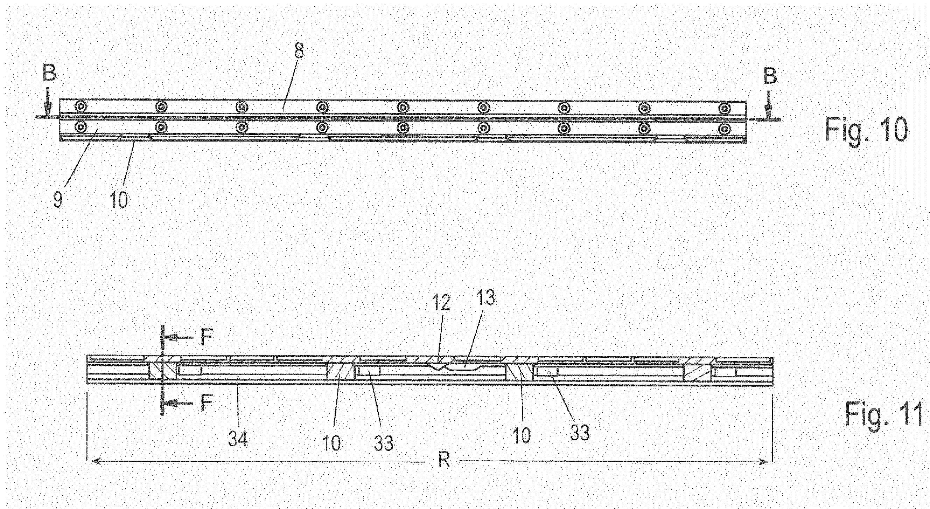

Diese Schließelemente sind als parallel zueinander ausrichtete, miteinander verrastbare Rastleisten 8, 9 ausgebildet. Die Rastleisten 8, 9 sind dabei derart ausgebildet, dass sie aus einer die Transporttasche 1 am unteren Ende verschließenden, miteinander verrasteten Transportstellung, wie sie beispielsweise in den Figuren 4 und 6 bis 9 gezeigt ist, durch gegeneinander Verschieben in Richtung der Längsachse I der Rastleisten 8, 9 in eine Entraststellung, wie sie in den Figuren 10 bis 12 gezeigt ist, verschiebbar sind, bei der die Rastleisten 8, 9 voneinander lösbar sind, zur Öffnung der Transporttasche 1 am unteren Ende.

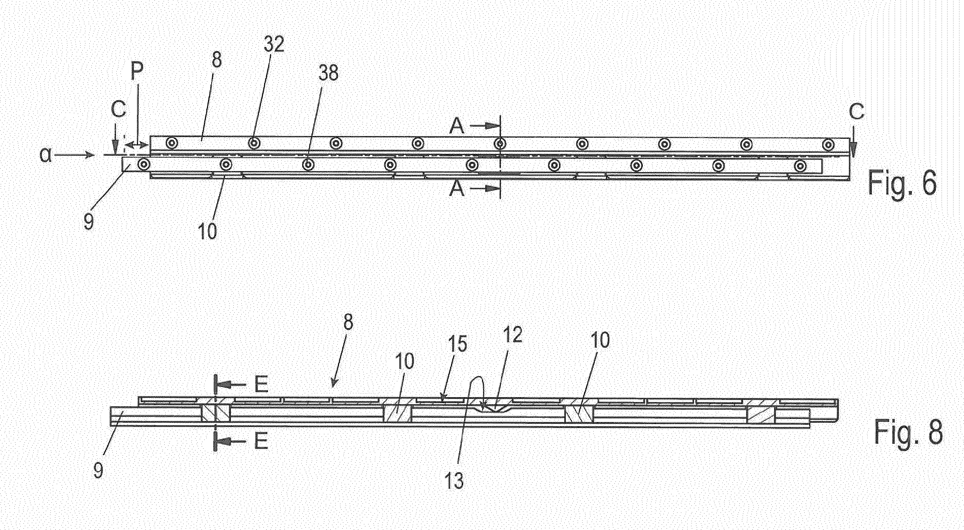

Wie in den Figuren 6 bis 12 gezeigt, sind an der ersten Rastleiste 8 wenigstens zwei in Richtung ihrer Längsachse I voneinander beabstandete Rastelemente 10 angeordnet sind, die im miteinander verrasteten Zustand der Rastleisten 8, 9 in Rastausnehmungen 11 der zweiten Rastleiste 9 gehalten sind, die ebenfalls in Richtung ihrer Längsachsen I voneinander beabstandet sind.

Die Rastausnehmungen 11 sind dabei bevorzugt als Hinterschnitte ausgebildet, die durch verdickte Rastbereiche 33 der zweiten Rastleiste 9 gebildet werden, die, im Schnitt vorzugsweise pilzförmig geformt, über eine Außenkontur 35 der im verrasteten Zustand zwischen die Rastelemente 10 der ersten Rastleiste 8 vorstehen.

Die Rastleisten 8, 9 können also einfach durch Aufeinanderdrücken verrastet werden.

Der Abstand der Rastbereiche 33 der zweiten Rastleiste 9 entspricht dabei dem Abstand der Rastelemente 10 in Längsrichtung der Rastleisten 8, 9 voneinander.

Die Rastleisten 8, 9 sind, wie in den Figuren 10 und 11 gezeigt, bevorzugt gleich lang ausgebildet.

Die erste Rastleiste 8 ist im mit der zweiten Rastleiste 9 verrasteten Zustand in Richtung ihrer Längsachse I parallel versetzt zur zweiten Rastleiste 9 um ein Versetzungsmaß p angeordnet. Dieses Versetzungsmaß p der Parallelversetzung der Rastleisten 8, 9 beträgt dabei vorzugsweise zwischen 1 cm und 10 cm, besonders bevorzugt zwischen 1 cm und 5 cm.

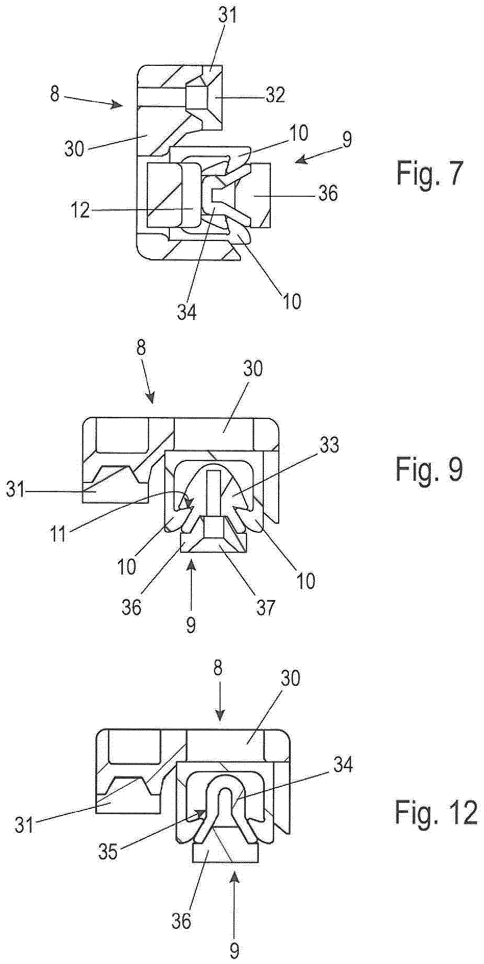

Durch Verschieben der Rastleisten 8, 9 in Längsrichtung I von der in Figur 6 gezeigten Raststellung in die in Figur 10 gezeigte Endraststellung werden die Rastelemente 10 außer Eingriff von den Rastausnehmungen 11 gebracht, wie es beispielsweise in Figur 12 dargestellt ist.

Dadurch werden die Rastleisten 8, 9 voneinander gelöst, so dass ein in der Transporttasche 1 befindlicher Gegenstand durch den durch die voneinander beabstandeten Rastleisten 8, 9 bewirkte Öffnung des Taschenbodens der Transporttasche 1 nach unten herausfallen und beispielsweise über eine Rutsche 24 einer Entladestation, wie sie in Figur 13 dargestellt ist, weggeführt werden kann.

Die Rastelemente 10 sind, wie in den Figuren 7, 9 und 12 dargestellt, bevorzugt als Haken ausgebildet. In dem in den Figuren 7, 9 und 12 gezeigten Ausführungsbeispiel sind die Rastelemente 10 c-förmig (oder A-förmig oder pfeilspitzenartig) ausgebildet und umgreifen die Rastbereiche 33 der zweiten Rastleisten 9 beidseitig.

Denkbar ist auch, die Rastelemente 10 als I-förmige Haken auszubilden, die wechselweise die Hinterschnitte 11 der zweiten Rastleiste 9 hintergreifen.

Um nach erfolgtem Verschieben der Rastleisten 8, 9 gegeneinander in die Entraststellung, wie sie in Figur 11 dargestellt ist, die beiden Rastleisten 8, 9 auseinanderzudrücken, ist an der ersten Rastleiste 8 wenigstens ein in Richtung der zweiten Rastleiste 9 vorstehende Nase angeformt, wie es beispielhaft in Figur 11 gezeigt ist.

Diese Nase 12 liegt im miteinander verrasteten Zustand der Rastleisten 8, 9 in einer Ausnehmung 13 auf einer der ersten Rastleiste 8 zugewandten Seitenkante 15 der zweiten Rastleiste 9. Die Breite der Ausnehmung 13 in Richtung der Längsachse I der zweiten Rastleiste 9 ist dabei so bemessen ist, dass die Nase 12 bei in die entrastete Position verschobenen Rastleisten 8, 9, wie in Figur 11 gezeigt, aus der Ausnehmung 13 herausgeschoben ist und dadurch die zweite Rastleiste 9 von der ersten Rastleiste 8 senkrecht zur Richtung der Längsachse I der Rastleisten 8, 9 wegdrückt.

Gleichzeitig bewirkt diese Nase 12 und Ausnehmung 13, dass zum Entrasten eine bestimmte Kraft überwunden werden muss, nämlich beim Schieben der Nase 12 den Rand der Ausnehmung hoch, was ein unbeabsichtigtes Öffnen bei einem ungewollten Stoß verhindert.

Die Rastleisten 8, 9 sind in einer Position an den jeweiligen Taschenwänden 2, 3 befestigt, beispielsweise verklemmt, dass sie im von dem Gestänge 6 herunterhängenden Zustand versetzt zueinander positioniert sind, wie es beispielsweise in Figur 3 dargestellt ist. Zur Befestigung der Rastleisten 8, 9 an der jeweiligen Taschenwand 2, 3 weisen die Rastleisten 8, 9 einen jeweiligen Grundkörper 30, 36 auf, an dem jeweils ein Klemmteil 31, insbesondere in Gestalt einer Klemmleiste mithilfe von Schrauben 37 befetigbar ist, wobei der untere Rand der jeweiligen Taschenwand 2, 3 zwischen Grundkörper 30 und Klemmteil 31 eingeklemmt ist.

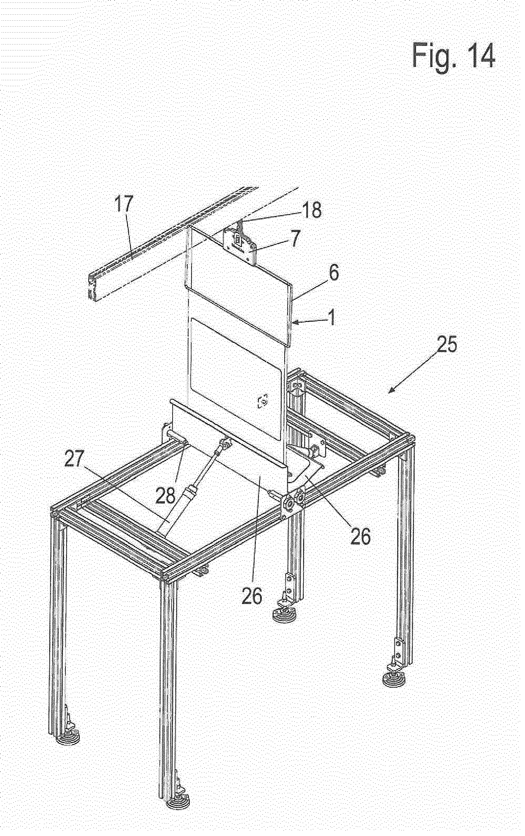

Die Rastleisten 8, 9 ermöglichen ein einfaches Verrasten durch Aneinanderdrücken der Rastleisten 8, 9 in einer Taschenschließstation 25, wie sie beispielsweise in Figur 14 dargestellt ist, so dass die Transporttasche 1 nach erfolgter Entleerung durch Zusammenführen der Taschenwände 2, 3 wieder verschließbar ist.

Ein Ausschnitt einer erfindungsgemäßen Fördervorrichtung zur Beförderung von Gegenständen, hier eine Entladestation 19, ist in Figur 13 dargestellt.

An dieser Entladestation 19 ankommende Transporttaschen 1, die mit einem zu befördernden Gegenstand gefüllt sind, werden hier geleert, wobei zur Entleerung die Rastleisten 8, 9 aus ihrer Raststellung in die Entraststellung bewegt werden.

Dazu weist die Entladestation 19 zwei Druckstempel 20 auf, mit einer senkrecht zur Richtung der Längsachse I der Rastleisten 8, 9 sich erstreckenden Andruckflächen 21, zwischen denen die Transporttasche 1 positionierbar ist.

Die Druckstempel 20 sind hier in Richtung der Längsachse I der Rastleisten 8, 9 derart verfahrbar, dass der Abstand zwischen den Druckstempeln 20 zwischen einem Einfahrmaß E, das größer ist als die Gesamtlänge der parallel versetzten Rastleisten 8, 9 im miteinander verrasteten Zustand, und einem Entrastungsmaß R, dass der Länge der Rastleisten 8, 9 entspricht, veränderbar ist.

Denkbar ist auch, nur einen der Druckstempel 20 verfahrbar an einem Gestell 22 der Entladestation 19 der Fördervorrichtung zu lagern.

Zur maschinell erfolgenden Entrastung der Rastleisten 8, 9 sind die Druckstempel 20 mithilfe eines Antriebs 23, bevorzugt als elektromotorischer Antrieb ausgeführt, an dem Gestell 22 montiert.

Unterhalb der Druckstempel 20 ist die Rutsche 24 positioniert, zur Wegführung des mit der Transporttasche 1 transportierten Gegenstandes.

Die anschließende Wiederverschließung der Transporttasche 1 erfolgt bevorzugt in einer in Förderrichtung x nachfolgenden Taschenschließstation 25, wie sie in Figur 14 beispielhaft gezeigt ist.

Die Taschenschließstation 25 weist zwei etwa senkrecht zur Richtung der Längsachse I der Rastleisten 8, 9 aufeinander zu bewegbare Druckplatten 26 auf, zwischen denen die Transporttasche 1 positionierbar ist.

Die Druckplatten 26 sind dabei von einer die voneinander getrennten Rastleisten 8, 9 zwischen sich aufnehmenden Position in eine die Rastleisten 8, 9 senkrecht zur Richtung der Längsachse I der Rastleisten 8, 9 zusammendrückenden und dabei miteinander verrastenden Schließposition bewegbar.

Bei der hier gezeigten Ausführungsvariante der Taschenschließstation 25 sind die Druckplatten 26 um eine parallel zur Längsachse der Rastleisten 8, 9 verlaufende Schwenkachse 28 verschwenkbar.

### Bezugszeichenliste

- 1: Transporttasche
- 2: erste Taschenwand
- 3: zweite Taschenwand
- 4: Seitenwand
- 5: Seitenwand
- 6: Gestänge
- 7: Einhängvorrichtung
- 8: erste Rastleiste
- 9: zweite Rastleiste
- 10: Rastelement
- 11: Rastausnehmung
- 12: Nase
- 13: Ausnehmung
- 14: Seitenkante
- 15: Seitenkante
- 16: Tascheneinfüllöffnung
- 17: Schienenprofil
- 18: Halteadapter
- 19: Entladestation
- 20: Druckstempel
- 21: Andruckfläche
- 22: Gestell
- 23: Antrieb
- 24: Rutsche
- 25: Taschenschließstation
- 26: Druckplatte
- 27: Stellstange
- 28: Schwenkachse
- 29: Platte
- 30: Grundkörper
- 31: Klemmteil
- 32: Schraube
- 33: Rastbereich
- 34: Entrastbereich
- 35: Außenkontur
- 36: Grundkörper
- 37: Schraube
- 38:

- P: Versetzungsmaß
- X: Förderrichtung
- E: Einfahrmaß
- R: Entrastungsmaß

## Patentansprüche

1. Transporttasche (1) für eine Fördervorrichtung, aufweisend
- eine erste Taschenwand (2),
- eine zweite Taschenwand (3),
- eine an einem oberen Ende einer der Taschenwände (2, 3) angeordnete Einhängvorrichtung (7),
- wobei an einem unteren, von der Einhängvorrichtung (7) entfernten Ende der Taschenwände (2, 3) jeweils reversibel aneinander koppelbare Schließelemente angeordnet sind, mit denen die unteren Enden der Taschenwände (2, 3) zu einem Taschenboden miteinander verbindbar sind,
**dadurch gekennzeichnet, dass**
- die Schließelemente als parallel zueinander ausgerichtete, miteinander verrastbare Rastleisten (8, 9) ausgebildet sind,
- wobei die Rastleisten (8, 9) derart ausgebildet sind, dass sie zur Einnahme einer die Transporttasche (1) am unteren Ende verschließenden, miteinander verrasteten Transportstellung in Querrichtung der Längsachse (I) der Rastleisten (8, 9) gegeneinander drückbar sind,
- wobei die Rastleisten (8, 9) derart ausgebildet sind, dass sie aus der die Transporttasche (1) am unteren Ende verschließenden, miteinander verrasteten Transportstellung durch gegeneinander Verschieben in Richtung der Längsachse (I) der Rastleisten (8, 9) in eine Entraststellung verschiebbar sind, bei der die Rastleisten (8, 9) voneinander lösbar sind, zur Öffnung der Transporttasche (1) am unteren Ende und wobei an der ersten Rastleiste (8) wenigstens eine in Richtung der zweiten Rastleiste (9) vorstehende Nase (12) angeformt ist, die im miteinander verrasteten Zustand der Rastleisten (8, 9) in einer Ausnehmung (13) auf einer der ersten Rastleiste (8) zugewandten Seitenkante (15) der zweiten Rastleiste (9) einliegt, wobei die Breite der Ausnehmung (13) in Richtung der Längsachse (I) der zweiten Rastleiste (9) so bemessen ist, dass die Nase (12) bei in die entrastete Position verschobenen Rastleisten (8, 9) aus der Ausnehmung (13) heraus geschoben ist.

2. Transporttasche (1) nach Anspruch 1, **dadurch gekennzeichnet, dass** an der ersten Rastleiste (8) wenigstens zwei in Richtung ihrer Längsachse (I) voneinander beabstandete Rastelemente (10) angeordnet sind, die im miteinander verrasteten Zustand der Rastleisten (8, 9) in Rastausnehmungen (11) der zweiten Rastleiste (9) gehalten sind, die in Richtung ihrer Längsachse (I) voneinander beabstandet sind.

3. Transporttasche (1) nach Anspruch 1 oder 2, **dadurch gekennzeichnet, dass** die Rastleisten (8, 9) gleich lang ausgebildet sind und dass die erste Rastleiste (8) im mit der zweiten Rastleiste (9) verrasteten Zustand in Richtung ihrer Längsachse (I) parallel versetzt zur zweiten Rastleiste (9) angeordnet ist.

4. Transporttasche (1) nach Anspruch 3, **dadurch gekennzeichnet, dass** das Versetzungsmaß (p) der Parallelversetzung der Rastleisten (8, 9) zwischen 1 cm und 10 cm, insbesondere zwischen 1 cm und 5 cm beträgt.

5. Transporttasche (1) nach einem der vorstehenden Ansprüche, **dadurch gekennzeichnet, dass** die Rastelemente (10) als Haken und die Rastausnehmungen (11) als Hinterschnitt ausgebildet sind.

6. Transporttasche (1) nach einem der vorstehenden Ansprüche, **dadurch gekennzeichnet, dass** die Rastelemente (10) c-förmig die Hinterschnitte hintergreifend ausgebildet sind.

7. Transporttasche (1) nach Anspruch 1, **dadurch gekennzeichnet, dass** obere, der Einhängvorrichtung (7) nahe Enden der Taschenwände (2, 3) an einem um eine parallel zur Längsachse (I) der Rastleisten (8, 9) ausgerichtete Schwenkachse schwenkbaren, eine Tascheneinfüllöffnung (16) bildenden Gestänge (6) befestigt sind, wobei die Einhängvorrichtung (7) an dem Gestänge (6) festgelegt ist.

8. Transporttasche (1) nach einem der vorstehenden Ansprüche, **dadurch gekennzeichnet, dass** die Taschenwände (2, 3) durch zwei faltbare Seitenwände (4, 5) miteinander verbunden sind.

9. Transporttasche (1) nach einem der vorstehenden Ansprüche, **dadurch gekennzeichnet, dass** die Rastleisten (8, 9) an den Taschenwänden (2, 3) festgeklemmt sind.

10. Förderanlage zur Beförderung von Gegenständen in Transporttaschen, aufweisend
- einen Hängeförderer mit einer in einer Förderrichtung (x) bewegbare Förderkette zum Fördern der Transporttaschen,
- Halteadapter (18) zur Halterung jeweils einer zu befördernden Transporttasche, die jeweils mit einer in den Halteadapter (18) einhängbaren Einhängvorrichtung (7) ausgestaltet sind,
- eine Taschenschließstation (25) und
- eine Entladestation (19),
- mindestens eine Transporttasche (1)
**dadurch gekennzeichnet, dass**
- die Transporttasche (1) gemäß einem der vorstehenden Ansprüche ausgebildet ist.

11. Förderanlage nach Anspruch 10, **dadurch gekennzeichnet, dass** die Entladestation (19) zwei Druckmittel (20) mit senkrecht zur Richtung der Längsachse (I) der Rastleisten (8, 9) sich erstreckenden Andruckflächen (21) aufweist, zwischen denen die Transporttasche (1) positionierbar ist, wobei wenigstens einer der Druckstempel (20) in Richtung der Längsachse (I) der Rastleisten (8, 9) derart verfahrbar ist, dass der Abstand zwischen den Druckmitteln (20) zwischen einem Einfahrmaß (E), das größer ist als die Gesamtlänge der parallel versetzten Rastleisten (8, 9) im miteinander verrasteten Zustand, und einem Entrastungsmaß (R), das der Länge der Rastleisten (8, 9) entspricht, veränderbar ist.

12. Förderanlage nach Anspruch 10 oder 11, **gekennzeichnet durch** eine Taschenschließstation (25) mit zwei senkrecht zur Richtung der Längsachse (I) der Rastleisten (8, 9) relativ aufeinander zu bewegbaren Druckmitteln (26), zwischen denen die Transporttasche (1) positionierbar ist, wobei die Druckmittel (26) von einer die voneinander getrennten Rastleisten (8, 9) zwischen sich aufnehmenden Position in eine die Rastleisten (8, 9) senkrecht zur Richtung der Längsachse (I) der Rastleisten (8, 9) zusammendrückenden und dabei miteinander verrastenden Schließposition bewegbar sind.

13. Förderanlage nach Anspruch 12, **dadurch gekennzeichnet, dass** die Druckmittel (26) um eine parallel zur Längsachse (I) der Rastleisten (8, 9) verlaufenden Schwenkachse (28) verschwenkbar sind.

14. Verfahren zum Öffnen einer Transporttasche (1) nach einem der Ansprüche 1 bis 9 in einer Förderanlage nach einem oder mehreren der Ansprüche 10 bis 13, **gekennzeichnet durch** die Verfahrensschritte:
- Verfahren der Transporttasche (1) entlang des Hängeförderers in die Entladestation (19) zwischen die zwei Druckmittel (20),
- Verfahren der Druckmittel (20) auf einem dem Entrastungsmaß (R) entsprechenden Abstand voneinander, wobei die Rastleisten (8, 9) aus ihrer die Transporttasche (1) am unteren Ende verschließenden Raststellung durch Gegeneinanderverschieben in Richtung der Längsachse (I) der Rastleisten (8, 9) in eine Entraststellung verschoben werden, bei der die Rastleisten (8, 9) voneinander gelöst werden, zur Öffnung der Transporttasche (1) am unteren Ende.

15. Verfahren zum Schließen einer Transporttasche (1) in einer Förderanlage nach einem oder mehreren der Ansprüche 10 bis 13, **gekennzeichnet durch** die Verfahrensschritte:
- Verfahren der Transporttasche (1) entlang des Hängeförderers in die Taschenschließstation (25) zwischen die zwei senkrecht zur Richtung der Längsachse (I) der Rastleisten (8, 9) aufeinander zu bewegbaren Druckmittel (26),
- Verfahren der Druckmittel (26) von einer die voneinander getrennten Rastleisten (8, 9) zwischen sich aufnehmenden Position in eine die Rastleisten (8, 9) senkrecht zur Richtung der Längsachse (I) der Rastleisten (8, 9) zusammendrückenden und dabei miteinander verrastenden Schließposition, zur Schließung der Transporttasche (1) am unteren Ende.

16. Anordnung einer Taschenentladestation (19) für eine Transporttasche nach einem der Ansprüche 1 bis 9 und einer solchen Transporttasche, **gekennzeichnet durch** zwei Druckmittel (20) mit je einer etwa senkrecht zur Richtung der Längsachse (I) der Rastleisten (8, 9) sich erstreckenden Andruckfläche (21), zwischen denen die Transporttasche (1) mit den Rastleisten (8, 9) positionierbar ist, wobei der Abstand der Druckmittel (20) in Richtung der Längsachse (I) der Rastleisten (8, 9) derart zueinander verkleinerbar ist, dass die Rastleisten (8, 9) zueinander verschoben werden.

17. Anordnung einer Taschenschließstation (25) für eine Transporttasche nach einem der Ansprüche 1 bis 9 und einer solchen Transporttasche, **gekennzeichnet durch** zwei quer zur Richtung der Längsachse (I) der Rastleisten (8, 9) aufeinander zu bewegbaren Druckmittel (26), zwischen denen die Transporttasche (1) mit den Rastleisten (8, 9) positionierbar ist, wobei der Abstand der Druckmittel (20) quer zur Richtung der Längsachse (I) der Rastleisten (8, 9) derart zueinander verkleinerbar ist, dass die Rastleisten (8, 9) aufeinander gepresst werden.

## Claims

1. Transport bag (1) for a conveying device, comprising
- a first bag wall (2),
- a second bag wall (3),
- a hanging device (7) arranged on an upper end of one of the bag walls (2, 3),
- wherein closing elements which can be reversibly coupled together are each arranged on a lower end of the bag walls (2, 3) remote from the hanging device (7), by means of which closing elements the lower ends of the bag walls (2, 3) can be connected together to form a bag base,
**characterised in that**
- the closing elements are formed as latching strips (8, 9) which can be latched to each other and are oriented in parallel with each other,
- wherein the latching strips (8, 9) are formed such that they can be pressed against each other in the direction transverse to the longitudinal axis (I) of the latching strips (8, 9) so as to adopt a mutually latched transport position closing the transport bag (1) at the lower end,
- wherein the latching strips (8, 9) are formed such that they can be displaced, by being displaced opposite each other in the direction of the longitudinal axis (I) of the latching strips (8, 9), from the mutually latched transport position which closes the transport bag (1) at the lower end, into an unlatching position in which the latching strips (8, 9) can be released from each other in order to open the transport bag (1) at the lower end and wherein at least one lug (12) protruding in the direction of the second latching strip (9) is integrally formed on the first latching strip (8), which lug lies, when the latching strips (8, 9) are latched to each other, in a recess (13) on a side edge (15) of the second latching strip (9) facing the first latching strip (8), wherein the width of the recess (13) in the direction of the longitudinal axis (I) of the second latching strip (9) is sized such that the lug (12) is slid out of the recess (13) when the latching strips (8, 9) have been displaced into the unlatched position.

2. Transport bag (1) as claimed in claim 1, **characterised in that** at least two latching elements (10) are arranged on the first latching strip (8) spaced apart from each other in the direction of the longitudinal axis (I) thereof, said elements being held, when the latching strips (8, 9) are latched to each other, in latching recesses (11) of the second latching strip (9), said recesses being spaced apart from each other in the direction of the longitudinal axis (I) thereof.

3. Transport bag (1) as claimed in claim 1 or 2, **characterised in that** the latching strips (8, 9) are of equal length, and **in that**, when latched to the second latching strip (9) the first latching strip (8) is arranged in a parallel-offset manner with respect to the second latching strip (9) in the direction of its longitudinal axis (I).

4. Transport bag (1) as claimed in claim 3, **characterised in that** the offset amount (p) of the parallel offset arrangement of the latching strips (8, 9) is between 1 cm and 10 cm, in particular between 1 cm and 5 cm.

5. Transport bag (1) as claimed in any one of the preceding claims, **characterised in that** the latching elements (10) are formed as hooks and the latching recesses (11) are formed as undercuts.

6. Transport bag (1) as claimed in any one of the preceding claims, **characterised in that** the latching elements (10) are c-shaped, to engage behind the undercuts.

7. Transport bag (1) as claimed in claim 1, **characterised in that** upper ends of the bag walls (2, 3) close to the hanging device (7) are secured to a rod assembly (6) which can pivot about a pivot axis oriented in parallel with the longitudinal axis (I) of the latching strips (8, 9) and forms a bag-filling opening (16), wherein the hanging device (7) is secured to the rod assembly (6).

8. Transport bag (1) as claimed in any one of the preceding claims, **characterised in that** the bag walls (2, 3) are connected together by two foldable side walls (4, 5).

9. Transport bag (1) as claimed in any one of the preceding claims, **characterised in that** the latching strips (8, 9) are fixedly clamped to the bag walls (2, 3).

10. Conveying system for conveying objects in transport bags, comprising
- an overhead conveying having a conveyor chain which can move in a conveying direction (x) for conveying the transport bags,
- holding adapters (18) for each holding a transport bag to be conveyed and each fitted with a hanging device (7) which can hang in the holding adapters (18),
- a bag closing station (25) and
- an unloading station (19),
- at least one transport bag (1)
**characterised in that**
- the transport bag (1) is formed as claimed in any one of the preceding claims.

11. Conveying system as claimed in claim 10, **characterised in that** the unloading station (19) comprises two pressure means (20) having pressure surfaces (21) extending perpendicularly to the direction of the longitudinal axis (I) of the latching strips (8, 9), the transport bag (1) being able to be positioned therebetween, wherein at least one of the pressure stamps (20) can travel in the direction of the longitudinal axis (I) of the latching strips (8, 9) such that the distance between the pressure means (20) can be altered between an insertion amount (E), which is larger than the overall length of the parallel-offset latching strips (8, 9) in the mutually latched state, and an unlatching amount (R) corresponding to the length of the latching strips (8, 9).

12. Conveying system as claimed in claim 10 or 11, **characterised by** a bag closing station (25) having two pressure means (26) which can move relatively towards each other perpendicularly to the direction of the longitudinal axis (I) of the latching strips (8, 9), the transport bag (1) being able to be positioned therebetween, wherein the pressure means (26) can move from a position receiving the mutually separated latching strips (8, 9) therebetween to a closing position pushing the latching strips (8, 9) together perpendicularly to the direction of the longitudinal axis (I) of the latching strips (8, 9) and thereby latching same to each other.

13. Conveying system as claimed in claim 12, **characterised in that** the pressure means (26) can be pivoted about a pivot axis (28) extending in parallel with the longitudinal axis (I) of the latching strips (8, 9).

14. Method for opening a transport bag (1) as claimed in any one of claims 1 to 9 in a conveying system as claimed in any one or more of claims 10 to 13, **characterised by** the method steps of:
- moving the transport bag (1) along the overhead conveyor into the unloading station (19) between the two pressure means (20),
- moving the pressure means (20) away from each other to a distance corresponding to the unlatching amount (R), wherein the latching strips (8, 9) are displaced, by being displaced opposite each other in the direction of the longitudinal axis (I) of the latching strips (8, 9), from their latching position closing the transport bag (1) at the lower end into an unlatching position in which the latching strips (8, 9) are released from each other in order to open the transport bag (1) at the lower end.

15. Method for closing a transport bag (1) in a conveying system as claimed in any one or more of claims 10 to 13, **characterised by** the method steps of:
- moving the transport bag (1) along the overhead conveyor into the bag closing station (25) between the two pressure means (26) which can move towards each other perpendicular to the direction of the longitudinal axis (I) of the latching strips (8, 9),
- moving the pressure means (26) from a position receiving the mutually separated latching strips (8, 9) therebetween to a closing position pushing the latching strips (8, 9) together perpendicularly to the direction of the longitudinal axis (I) of the latching strips (8, 9) and thereby latching same to each other, in order to close the transport bag (1) at the lower end.

16. Arrangement of a bag unloading station (19) for a transport bag as claimed in any one of claims 1 to 9 and of such a transport bag, **characterised by** two pressure means (20) each having a pressure surface (21) extending approximately perpendicularly to the direction of the longitudinal axis (I) of the latching strips (8, 9), the transport bag (1) with the latching strips (8, 9) being able to be positioned therebetween, wherein the distance between the pressure means (20) in the direction of the longitudinal axis (I) of the latching strips (8, 9) can be reduced with respect to each other such that the latching strips (8, 9) are displaced with respect to each other.

17. Arrangement of a bag closing station (25) for a transport bag as claimed in any one of claims 1 to 9 and of such a transport bag, **characterised by** two pressure means (20) which can move towards each other transversely to the direction of the longitudinal axis (I) of the latching strips (8, 9), the transport bag (1) with the latching strips (8, 9) being able to be positioned therebetween, wherein the distance between the pressure means (20) transverse to the direction of the longitudinal axis (I) of the latching strips (8, 9) can be reduced with respect to each other such that the latching strips (8, 9) are pressed together.

## Revendications

1. Sac de transport (1) destiné à un dispositif de transport, ledit sac comportant
- une première paroi de sac (2),
- une deuxième paroi de sac (3),
- un dispositif d'accrochage (7) disposé à une extrémité supérieure de l'une des parois de sac (2, 3),
- des éléments de fermeture qui peuvent être accouplés de manière réversible les uns aux autres étant disposés à une extrémité inférieure des parois de sac (2, 3), éloignée du dispositif d'accrochage (7), lesquels éléments de fermeture permettent de relier les extrémités inférieures des parois de sac (2, 3) les unes aux autres pour obtenir un fond de sac,
**caractérisé en ce que**
- les éléments de fermeture sont réalisés sous la forme de baguettes d'encliquetage (8, 9) orientées parallèlement les unes aux autres et pouvant être encliquetées les unes aux autres,
- les baguettes d'encliquetage (8, 9) étant conçues de manière à pouvoir être pressées les unes contre les autres dans la direction transversale à l'axe longitudinale (I) afin prendre une position de transport dans laquelle elles sont encliquetées les unes aux autres et ferment le sac de transport (1) à l'extrémité inférieure,
- les baguettes d'encliquetage (8, 9) étant conçues de manière à pouvoir coulisser, par coulissement les unes vers les autres en direction de l'axe longitudinal (I) des baguettes d'encliquetage, de la position de transport, dans laquelle elles sont encliquetées les unes aux autres et ferment le sac de transport (1) à l'extrémité inférieure, dans une position de désencliquetage dans laquelle les baguettes d'encliquetage (8, 9) peuvent être désolidarisées les unes des autres afin d'ouvrir le sac de transport à l'extrémité inférieure et au moins un ergot (12), qui fait saillie en direction de la deuxième baguette d'encliquetage (9), étant formé sur la première baguette d'encliquetage (8) et étant positionné, lorsque les baguettes d'encliquetage (8, 9) sont encliquetées les unes aux autres, dans un évidement ménagé sur un bord latéral (15), dirigé vers la première baguette d'encliquetage (8), de la deuxième baguette d'encliquetage (9), la largeur de l'évidement (13) en direction de l'axe longitudinal (I) de la deuxième baguette d'encliquetage (9) étant dimensionnée de telle sorte que l'ergot (12) sorte de l'évidement (13) lorsque les baguettes d'encliquetage (8, 9) sont déplacés jusque dans la position de désencliquetage.

2. Sac de transport (1) selon la revendication 1, **caractérisé en ce qu'**au moins deux éléments d'encliquetage (10), espacés l'un de l'autre en direction de leur axe longitudinal (I), sont disposés sur la première baguette d'encliquetage (8) et, lorsque les baguettes (8, 9) sont encliquetées les unes autres, sont maintenus dans des évidements d'encliquetage de la deuxième baguette (9) qui sont espacés les uns des autres en direction de leur axe longitudinal (I).

3. Sac de transport (1) selon la revendication 1 ou 2, **caractérisé en ce que** les baguettes d'encliquetage (8, 9) sont de même longueur et **en ce que** la première baguette d'encliquetage (8) est disposée, lorsqu'elle est encliquetée à la deuxième baguette d'encliquetage (9), de manière décalée parallèlement à la deuxième baguette d'encliquetage (9) en direction de son axe longitudinal (I).

4. Sac de transport (1) selon la revendication 3, **caractérisé en ce que** la valeur (p) du décalage parallèle des baguettes d'encliquetage (8, 9) est comprise entre 1 cm et 10 cm, notamment entre 1 cm et 5 cm.

5. Sac de transport (1) selon l'une des revendications précédentes, **caractérisé en ce que** les éléments d'encliquetage (10) sont réalisés sous la forme de crochets et les évidements d'encliquetage (11) sont réalisés sous la forme de contre-dépouille.

6. Sac de transport (1) selon l'une des revendications précédentes, **caractérisé en ce que** les éléments d'encliquetage (10) sont conçus sous la forme d'un C destiné à s'engager derrière les contre-dépouilles.

7. Sac de transport (1) selon la revendication 1, **caractérisé en ce que** des extrémités supérieures, proches du dispositif d'accrochage (7), des parois de sac (2, 3) sont fixées à un ensemble de tiges (6) qui forme une ouverture de remplissage de sac (16) et qui peut pivoter sur un axe de pivotement orienté parallèlement à l'axe longitudinal (I) des baguettes d'encliquetage (8, 9), le dispositif d'accrochage (7) étant fixé à l'ensemble de tiges (6).

8. Sac de transport (1) selon l'une des revendications précédentes, **caractérisé en ce que** les parois de sac (2, 3) sont reliées les unes aux autres par deux parois latérales pliables (4, 5).

9. Sac de transport (1) selon l'une des revendications précédentes, **caractérisé en ce que** les baguettes d'encliquetage (8, 9) sont serrées sur les parois de sac (2, 3).

10. Système de convoyage destiné à convoyer des objets dans des sacs de transport, ledit système comportant
- un convoyeur aérien muni d'une chaîne de convoyage mobile dans une direction de convoyage (x) et destinée à convoyer les sacs de transport,
- des adaptateurs de support (18) destinés à supporter chacun un sac de transport à convoyer et munis chacun d'un dispositif d'accrochage (7) pouvant être accroché dans l'adaptateur de support (18),
- un poste de fermeture de sac (25) et
- un poste de déchargement (19),
- au moins un sac de transport (1),
**caractérisé en ce que**
- le sac de transport (1) est conçu selon l'une des revendications précédentes.

11. Système de convoyage selon la revendication 10, **caractérisé en ce que** le poste de déchargement (19) comporte deux moyens de pression (20) pourvus de surfaces de pression (21) qui s'étendent perpendiculairement à la direction de l'axe longitudinal (I) des baguettes d'encliquetage (8, 9) et entre lesquelles le sac de transport (1) peut être positionné, au moins un des tampons de pression (20) pouvant être déplacé en direction de l'axe longitudinal (I) des baguettes d'encliquetage (8, 9) de manière à ce que la distance entre les moyens de pression (20) peut être modifiée entre une dimension de rétraction (E), qui est supérieure à la longueur totale des baguettes d'encliquetage (8, 9) décalées en parallèle lorsqu'elles sont encliquetées les unes aux autres, et une dimension de désencliquetage (R), qui correspond à la longueur des baguettes d'encliquetage (8, 9).

12. Système de convoyage selon la revendication 10 ou 11, **caractérisé par** un poste de fermeture de sac (25) muni de deux moyens de pression (26) qui sont mobiles l'un par rapport à l'autre perpendiculairement à la direction de l'axe longitudinal (I) des baguettes d'encliquetage (8, 9) et entre lesquels le sac de transport (1) peut être positionné, les moyens de pression (26) étant mobiles d'une position, dans laquelle ils reçoivent entre eux les baguettes d'encliquetage (8, 9) séparées les unes des autres, à une position de fermeture dans laquelle les baguettes d'encliquetage (8, 9) sont comprimées perpendiculairement à la direction de l'axe longitudinal (I) des baguettes d'encliquetage (8, 9) et sont ainsi encliquetées les unes aux autres.

13. Système de convoyage selon la revendication 12, **caractérisé en ce que** les moyens de pression (26) peuvent pivoter sur un axe de pivotement (28) s'étendant parallèlement à l'axe longitudinal (I) des baguettes d'encliquetage (8, 9).

14. Procédé d'ouverture d'un sac de transport (1) selon l'une des revendications 1 à 9 dans un système de convoyage selon une ou plusieurs des revendications 10 à 13, **caractérisé par** les étapes suivantes :
- déplacer le sac de transport (1) le long du convoyeur aérien jusque dans le poste de déchargement (19) entre les deux moyens de pression (20),
- déplacer les moyens de pression (20) à une distance les uns des autres correspondant à la dimension de désencliquetage (R), les baquettes d'encliquetage (8, 9) étant déplacées, par coulissement les unes vers les autres en direction de l'axe longitudinal (I) des baguettes d'encliquetage (8, 9), de leur position d'encliquetage, dans laquelle elles ferment le sac de transport (1) à l'extrémité inférieure, à une position de désencliquetage dans laquelle les baguettes d'encliquetage (8, 9) sont désolidarisées les unes des autres afin d'ouvrir le sac de transport (1) à l'extrémité inférieure.

15. Procédé de fermeture d'un sac de transport (1) dans un système de convoyage selon une ou plusieurs des revendications 10 à 13, **caractérisé par** les étapes suivantes :
- déplacer le sac de transport (1) le long du convoyeur aérien jusque dans le poste de fermeture de sac (25) entre les deux moyens de pression (26) qui sont mobiles l'un vers l'autre perpendiculairement à la direction de l'axe longitudinal (I) des baguettes d'encliquetage (8, 9),
- déplacer les moyens de pression (26) d'une position, dans laquelle ils reçoivent entre eux les baguettes d'encliquetage (8, 9) séparées les unes des autres, à une position de fermeture, dans laquelle les baguettes d'encliquetage (8, 9) sont comprimées perpendiculairement à la direction de l'axe longitudinal (I) des baguettes d'encliquetage (8, 9) et sont ainsi encliquetées les unes aux autres, afin de fermer le sac de transport (1) à l'extrémité inférieure.

16. Agencement d'un poste de déchargement de sac (19) destiné à un sac de transport selon l'une des revendications 1 à 9 et d'un tel sac de transport, **caractérisé par** deux moyens de pression (20) pourvus chacun de surfaces de pression (21) qui s'étendent à peu près perpendiculairement à la direction de l'axe longitudinal (I) des baguettes d'encliquetage (8, 9) et entre lesquelles le sac de transport (1) munis des baguettes d'encliquetage (8, 9) peut être positionné, la distance entre les moyens de pression (20) en direction de l'axe longitudinal (I) des baguettes d'encliquetage (8, 9) pouvant être réduite de manière à déplacer les baguettes d'encliquetage (8, 9) les unes par rapport aux autres.

17. Agencement d'un poste de fermeture de sac (25) destiné à un sac de transport selon l'une des revendications 1 à 9 et d'un tel sac de transport, **caractérisé par** deux moyens de pression (26) qui sont mobiles l'un vers l'autre transversalement à la direction de l'axe longitudinal (I) des baguettes d'encliquetage (8, 9) et entre lesquels le sac de transport (1) munis des baguettes d'encliquetage (8, 9) peut être positionné, la distance entre les moyens de pression (20) transversalement à l'axe longitudinal (I) des baguettes d'encliquetage (8, 9) pouvant être réduite de manière à presser les baguettes d'encliquetage (8, 9) les unes sur les autres.
